# EUROPEAN PATENT SPECIFICATION

(11) **EP 2 352 284 B1**
(45) Date of publication and mention of the grant of the patent: **26.08.2015**
(21) Application number: 10191482.8
(22) Date of filing: 17.11.2010
(51) Int. Cl.: H04N 5/445, G06F 3/048

(54) **Method for providing GUI and multimedia device using the same**
Verfahren zur GUI-Bereitstellung und Multimediavorrichtung damit
Procédé pour la fourniture d'une interface graphique et dispositif multimédia l'utilisant

(30) Priority: 14.12.2009 KR 20090124104
(43) Date of publication of application: 03.08.2011
(73) Proprietor: Samsung Electronics Co., Ltd., Suwon-si, Gyeonggi-do, 443-742 (KR)
(72) Inventor: Hyeon, Su-gyeong, Gyeonggi-do (KR); Kim, Yoo-tai, Gyeonggi-do (KR); Lee, Dong-heon, Seoul (KR); Seong, Hye-young, Gyeonggi-do (KR); Kim, Jung-a, Gyeonggi-do (KR)
(74) Representative: Hewett, Jonathan Michael Richard

(56) References cited:
- EP-A2- 2 088 502
- US-A1- 2002 063 737
- US-A1- 2009 183 120

## Description

The present invention relates to a method for providing a graphical user interface (GUI) and a multimedia device using the same, and more particularly, to a method for providing a GUI which receives a user command on a touch screen and a multimedia device using the same.

As remarkably developed digital technology is applied to multimedia devices, functions provided by the multimedia devices have increased exponentially. In particular, recently, functions provided by multimedia devices have been provided through items on a screen, taking into consideration an exterior beauty of the multimedia devices and convenience of user access to the multimedia devices.

However, since portable multimedia devices should be made in consideration of convenience of portability, the screen cannot limitlessly become bigger for convenience of manipulation of the user.

In particular, multimedia devices having touch screens are currently a general trend. When a multimedia device having a touch screen is playing back a movie or music, it is difficult for the user to precisely operate the multimedia device using an item which is provided through a small display.

Therefore, when the user wishes to precisely search for content, there is a need for methods for the user to provide a GUI capable of precise operation for a particular section.

EP2088502 A2 discloses a method for providing a GUI to receive a user command on a touch screen, the method including determining whether an enlargement command for a GUI item is received, and enlarging the GUI item. US2009/0183120 A1 discloses a magnification function in a GUI which magnifies items within a userbar when they are proximate the cursor.

Embodiments of the present invention provide a GUI providing method in which, if a specific section of a GUI item is selected, the length of the selected section is extended and the lengths of the non-selected sections are reduced, and a multimedia device using the same.

According to an aspect of the present invention, there is provided a method according to claim 1.

In the extending and reducing operation, the entire length of the GUI item may be maintained and all the sections of the GUI item may be displayed.

In the determining operation, it may be determined if the user command is input through a touch screen.

In the determining operation, if the specific section of the GUI item is touched for greater than a preset period of time, it may be determined that the user command is input to select the specific section of the GUI item, and in the extending and reducing operation, the length of the specific section which is touched for greater than the preset period of time may be extended and the lengths of the non-selected sections may be reduced.

In the determining operation, if the specific section of the GUI item is touched at least twice consecutively, it may be determined that the user command is input to select the specific section of the GUI item, and in the extending and reducing operation, the length of the specific section which is touched at least twice consecutively may be extended and the lengths of the non-selected sections may be reduced.

In the determining operation, if a first section on the GUI item is touched and dragged to a second section on the GUI item, it may be determined that the user command is input to select the first section, the second section, and any section between the first section and the second section on the GUI item, and in the extending and reducing operation, the lengths of the first to second sections may be extended and the lengths of the non-selected sections may be reduced.

In the determining operation, if the GUI item is touched to pass through a first section and a second section, it may be determined that the user command is input to select the first section, the second section, and any section between the first section and the second section on the GUI item, and in the extending and reducing operation, the lengths of the first to second sections may be extended and the lengths of the non-selected sections may be reduced.

The method may further include, after the length of the selected section is extended, determining if a user command is input to extend a reduced section, and extending the length of the reduced section and reducing remaining sections of the plurality of sections other than the reduced section which is extended if it is determined that the user command is input to extend the reduced section.

The GUI item may include at least one of a progress bar, a scroll bar, and a state adjusting bar.

The plurality of sections of the GUI item may be divided in a time unit.

According to another aspect of the present invention, there is provided a multimedia device according to claim 11.

The control unit may control the multimedia device so that the entire length of the GUI item is maintained and all the sections of the GUI item are displayed.

The input unit may be a touch screen.

If the specific section of the GUI item is touched for greater than a preset period of time, the control unit may determine that the user command is input to select the specific section of the GUI item so that the length of the specific section which is touched for greater than the preset period of time is extended and the lengths of the non-selected sections are reduced.

If the specific section of the GUI item is touched at least twice consecutively, the control unit may determine that the user command is input to select the specific section of the GUI item so that the length of the specific section which is touched at least twice consecutively is extended and the lengths of the non-selected sections are reduced.

If a first section on the GUI item is touched and dragged to a second section on the GUI item, the control unit may determine that the user command is input to select the first section, the second section, and any section between the first section and the second section on the GUI item so that the lengths of the first to second sections are extended and the lengths of the non-selected sections are reduced.

If the GUI item is touched to pass through a first section and a second section, the control unit may determine that the user command is input to select the first section, the second section, and any section between the first section and the second section on the GUI item so that the lengths of the first to second sections are extended and the lengths of the non-selected sections are reduced.

After the length of the selected section is extended, if a user command is input to extend a reduced section, the control unit may extend the length of the reduced section and reduce lengths of remaining sections other than the reduced section which is selected to be reduced.

The GUI item may include at least one of a progress bar, a scroll bar, and a state adjusting bar.

The plurality of sections of the GUI item may be divided in a time unit.

According to another aspect of the present invention, there is provided an apparatus which provides a graphical user interface (GUI) to a display, the apparatus including: an input unit which receives a user command to select a specific section, among a plurality of sections which are currently displayed on the display, of a graphical user interface (GUI) item comprising the plurality of sections; and a control unit which extends a length of the selected section and which reduces lengths of non-selected sections if it is determined that the user command is to select the specific section of the GUI item.

The above and/or other aspects will be more apparent by describing certain exemplary embodiments with reference to the accompanying drawings, in which:
FIGs. 1A and 1B illustrate a process of extending a specific section of a progress bar according to an exemplary embodiment;
FIGs. 2A and 2B illustrate another process of extending a specific section of a progress bar according to an exemplary embodiment;
FIGs. 3A and 3B illustrate a process of extending a plurality of specific sections of a progress bar according to an exemplary embodiment;
FIGs. 4A and 4B illustrate another process of extending a plurality of specific sections of a progress bar according to an exemplary embodiment;
FIGs. 5A through 5C illustrate a process of extending a reduced section of a progress bar according to an exemplary embodiment;
FIG. 6 is a block diagram of a multimedia device which provides a graphical user interface (GUI) including a progress bar having an extended section according to an exemplary embodiment; and
FIG. 7 is a flow chart illustrating a GUI providing method according to an exemplary embodiment.

Certain exemplary embodiments will now be described in greater detail with reference to the accompanying drawings. In the following description, like drawing reference numerals are used for like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the exemplary embodiments with unnecessary detail. Moreover, expressions such as "at least one of," when preceding a list of elements, modify the entire list of elements and do not modify the individual elements of the list.

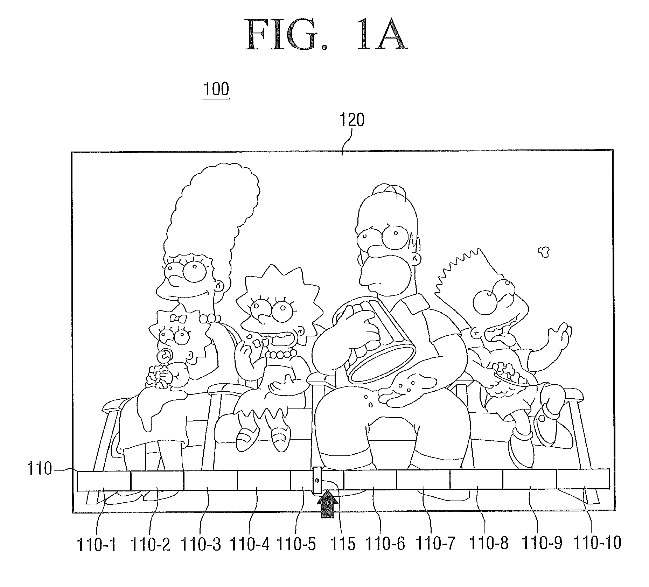

FIG. 1A illustrates a touch screen 100 to display diverse items. The touch screen 100 displays a screen 120 regarding multimedia content currently being displayed, and a progress bar 110 regarding the content.

The screen 120 displays a playback screen of the multimedia content. The multimedia content may include video content such as movies and soap operas, music content, and music content with videos. In this exemplary embodiment, video content or music content with videos are described as an example, such that the touch screen 100 displays video content. However, it is understood that another exemplary embodiment is not limited thereto, and can display the progress bar 110 when music content is played back. In this case, the screen 120 does not provide video.

The progress bar 110 provides position information of currently played-back content. That is, the progress bar 110 provides the user with information regarding a current playback position of content which is played back according to a user command. The position information is displayed distinctly from the remaining positions of the progress bar 110.

In this exemplary embodiment, the progress bar 110 of content has a bar shape having a plurality of sections 110-1, 110-2, ..., and 110-10. A section indicates the playback time of content divided according to a predetermined basis. For example, if a movie is played back on the screen 120, a section may be a time unit obtained by dividing the entire playback time of the movie according to a predetermined time basis. If still images are sequentially displayed on the screen 120, a section may be a time taken to display a single still image.

A position item 115 indicating a current playback position on the progress bar 110 is expressed by a square block having a point therein in the present exemplary embodiment, though it is understood that another exemplary embodiment is not limited in shape thereto. Accordingly, the current playback position can be distinguished from the remaining positions of the progress bar 110.

The position item 115 can be moved on the progress bar 110 by the user. That is, if the user moves the position item 115 on the progress bar 110, the current playback time point of the content changes and the content is played back from the changed time point.

Moving the position item 115 may be input by touching a desired point on the progress bar 110. That is, the point to which the position item 115 is desired to be moved is a time point at which the user wishes the content is played back.

Hereinafter, among all the sections of the progress bar 110, a method for extending or reducing a specific section of the progress bar 110 so that the user can more precisely select a section desired to play back the content, and the results are described in greater detail with reference to FIGs. 1A through 5C.

FIG. 1A illustrates a method for extending section 110-5 on the progress bar 110 by touching section 110-5 for greater than a predetermined time period (e.g., 3 seconds). As illustrated in FIG. 1A, on the touch screen 100 displaying the progress bar 110, if the user presses section 110-5 of the progress bar 110 for greater than 3 seconds, the length of section 110-5 is extended on the touch screen 100. In contrast, the lengths of the non-selected sections 110-1, ..., 110-4, 110-6, ..., and 110-10 are reduced.

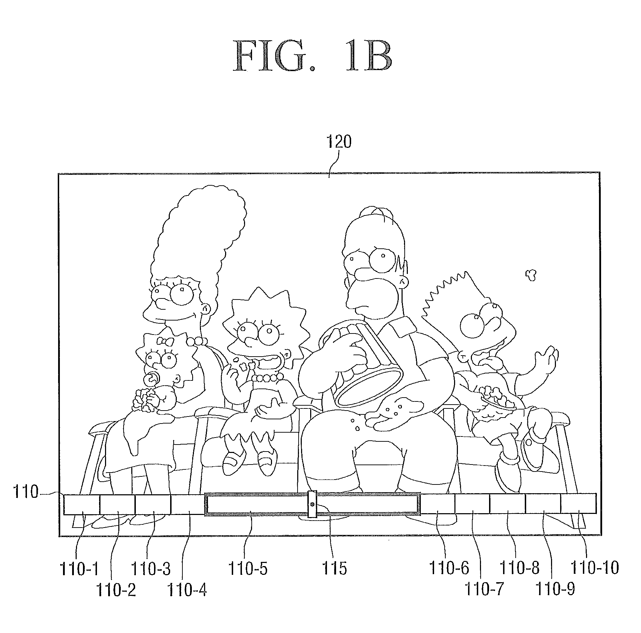

FIG. 1B illustrates the extended length of section 110-5 and the reduced lengths of the non-selected sections 110-1, ..., 110-4, 110-6, ..., and 110-10 on the progress bar 110 when the user presses section 110-5 on the progress bar 110 for greater than 3 seconds as illustrated in FIG. 1A.

For example, if the entire length of the progress bar 110 is 20 cm, the lengths of all the sections 110-1, ..., and 110-10 are 2 cm before section 110-5 is extended. However, if a user command is input to extend section 110-5, section 110-5 is extended to 11 cm and the remaining sections 110-1, ..., 110-4, 110-6, ..., and 110-10 are reduced to 1 cm. That is, the entire length of the progress bar 110 is maintained and all the sections 110-1, ..., and 110-10 of the progress bar 110 are displayed, but section 110-5 is extended and the remaining sections 110-1, ..., 110-4, 110-6, ..., and 110-10 are reduced. The lengths of the reduced sections 110-1, ..., 110-4, 110-6, ..., and 110-10 are the same. In this case, the extended section 110-5 is highlighted to be distinct from the reduced sections 110-1, ..., 110-4, 110-6, ..., and 110-10, as illustrated in FIG. 1B, though it is understood that another exemplary embodiment is not limited thereto.

As described above, if a user command is input to extend section 110-5 on the progress bar 110, section 110-5 is extended and the remaining sections 110-1, ..., 110-4, 110-6, ..., and 110-10 are reduced, so the user can control the extended section 110-5 of the progress bar 110 more precisely.

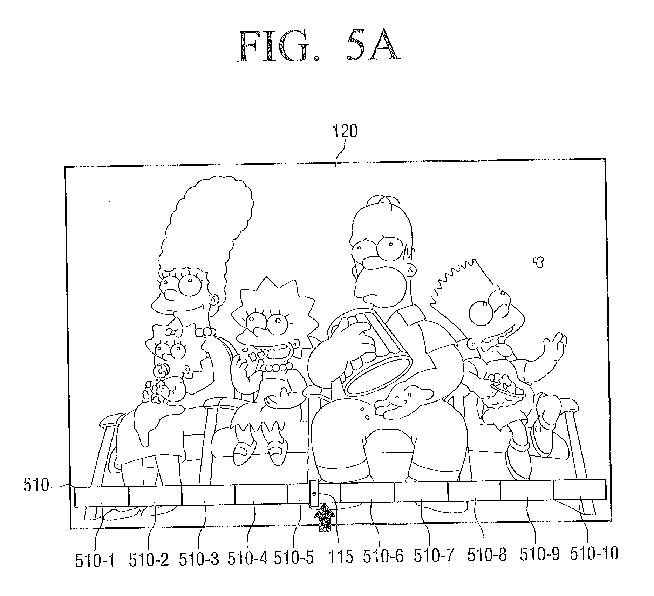

For example, if the entire running time of video content is 1 hour and the progress bar 110 includes 10 sections, a single section has video content of 6 minutes. The extended section 110-5 of 11 cm includes video content of 6 minutes, and each remaining section 110-1, ..., 110-4, 110-6, ..., and 110-10 includes content of 6 minutes in 1 cm. Therefore, the user can control playback of the extended section 110-5 with a 5.5 fold increase in precision. Furthermore, the non-selected sections 110-1, ..., 110-4, 110-6, ..., and 110-10 do not disappear, so the user can easily search for another section precisely if so desired. This is described later with reference to FIGs. 5A through 5C.

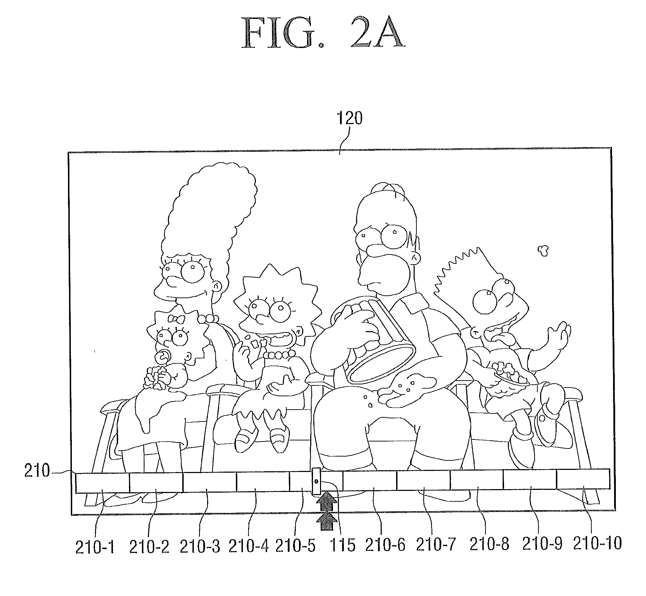

FIG. 2A illustrates a method for extending section 210-5 on a progress bar 210 by touching section 210-5 plural times (e.g., twice) consecutively. As illustrated in FIG. 2A, on the touch screen 100 displaying the progress bar 210, if the user presses section 210-5 of the progress bar 210 twice consecutively, the length of section 210-5 is extended on the touch screen 100. The lengths of the non-selected sections 210-1, ..., 210-4, 210-6, ..., and 210-10 are reduced.

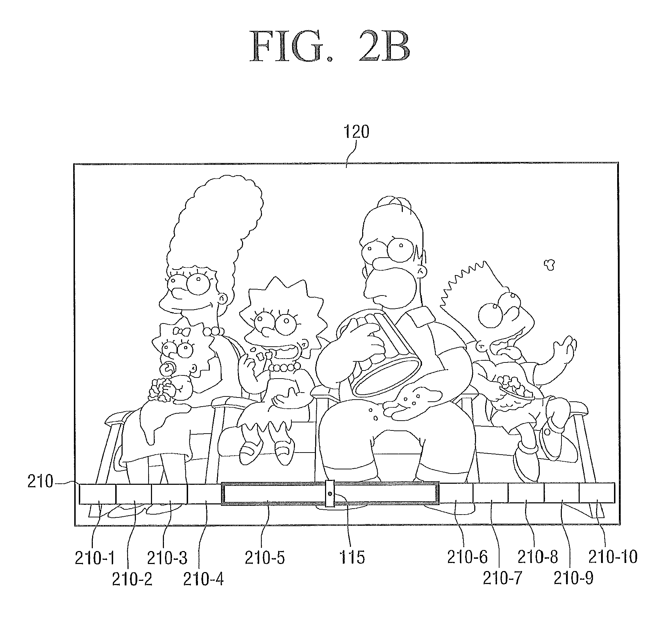

FIG. 2B illustrates the extended length of section 210-5 and the reduced lengths of the non-selected sections 210-1, ..., 210-4, 210-6, ..., and 210-10 on the progress bar 210 when the user presses section 210-5 on the progress bar 210 twice consecutively as illustrated in FIG. 2A. In this case, the extended section 210-5 is highlighted to be distinct from the reduced sections 210-1, ..., 210-4, 210-6, ..., and 210-10, as illustrated in FIG. 2B, though it is understood that another exemplary embodiment is not limited thereto.

That is, when the user touches a specific section twice consecutively, the same result occurs as when the user touches a specific section for greater than 3 seconds in the exemplary embodiment illustrated in FIGs. 1A and 1B.

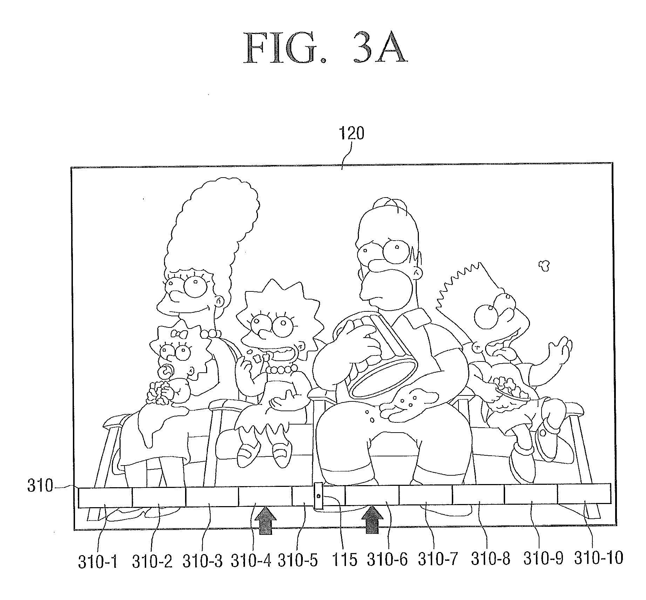

FIG. 3A illustrates a method for extending a plurality of sections 310-4, 310-5, and 310-6 on a progress bar 310 by touching two sections 310-4 and 310-6. Referring to FIG. 3A, if the user selects and touches one section 310-4 and another section 310-6 on the progress bar 310, the selected two sections 310-4 and 310-6 and section 310-5 disposed therebetween are extended. As an example, the two sections 310-4 and 310-6 on the progress bar 310 may be selected by first touching section 310-4 and then dragging the user's finger to section 310-6.

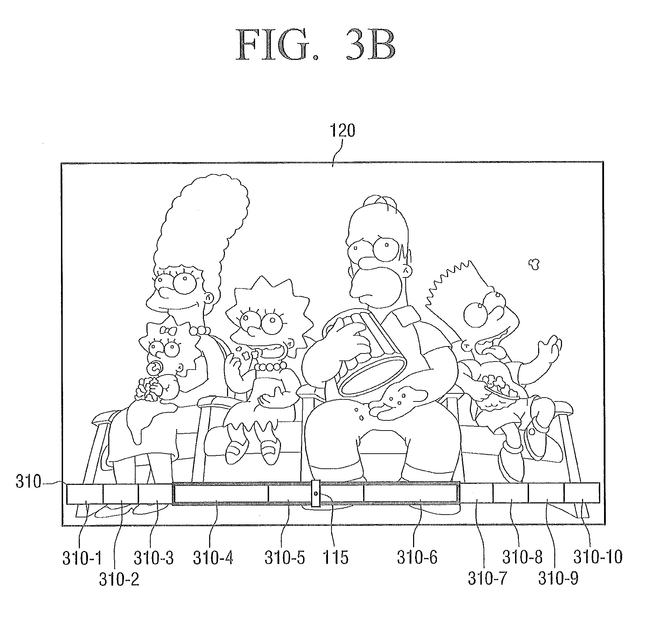

FIG. 3B illustrates the extended length of the selected sections 310-4, 310-5, and 310-6 and the reduced lengths of the non-selected sections 310-1, ..., 310-3, 310-7, ..., and 310-10 on the progress bar 310 when the user presses the two sections 310-4 and 310-6 on the progress bar 310 as illustrated in FIG. 3A.

For example, if the entire length of the progress bar 310 is 20 cm, the respective lengths of all the sections 310-1, ..., and 310-10 are 2 cm before sections 310-4, 310-5, and 310-6 are extended. However, if a user command is input to extend sections 310-4, 310-5, and 310-6, sections 310-4, 310-5, and 310-6 are extended to 13/3 cm and the remaining sections 310-1, ..., 310-3, 310-7, ..., and 310-10 are reduced to 1 cm. That is, the entire length of the progress bar 310 is maintained and all the sections 310-1, ..., and 310-10 of the progress bar 310 are displayed, but the selected sections 310-4, 310-5, and 310-6 are extended and the remaining sections 310-1, ..., 310-3, 310-7, ..., and 310-10 are reduced. The lengths of the reduced sections 310-1, ..., 310-3, 310-7, ..., and 310-10 are the same. In this case, the extended sections 310-4, 310-5, and 310-6 are highlighted to be distinct from the reduced sections 310-1, ..., 310-3, 310-7, ..., and 310-10, as illustrated in FIG. 3B, though it is understood that another exemplary embodiment is not limited thereto.

As described above, if a user command is input to extend the plurality of sections 310-4, 310-5, and 310-6 on the progress bar 310, the plurality of sections 310-4, 310-5, and 310-6 are extended and the remaining sections 310-1, ..., 310-3, 310-7, ..., and 310-10 are reduced, so the user can control the extended sections 310-4, 310-5, and 310-6 on the progress bar 110 more precisely. For example, if the entire running time of video content is 1 hour and the progress bar 310 includes 10 sections, a single section has video content of 6 minutes. Each of the extended sections 310-4, 310-5, and 310-6 includes video content of 6 minutes in 13/3 cm, and each of the remaining sections 310-1, ..., 310-3, 310-7, ..., and 310-10 includes content of 6 minutes in 1 cm. Therefore, the user can control playback of the extended sections 310-4, 310-5, and 310-6 with an approximately 2.2 fold increase in precision.

In the present exemplary embodiment, three sections 310-4, 310-5, and 310-6 are selected to be extended. However, it is understood that another exemplary embodiment is not limited thereto, and any number of sections may be selected to be extended by touching two sections as described above.

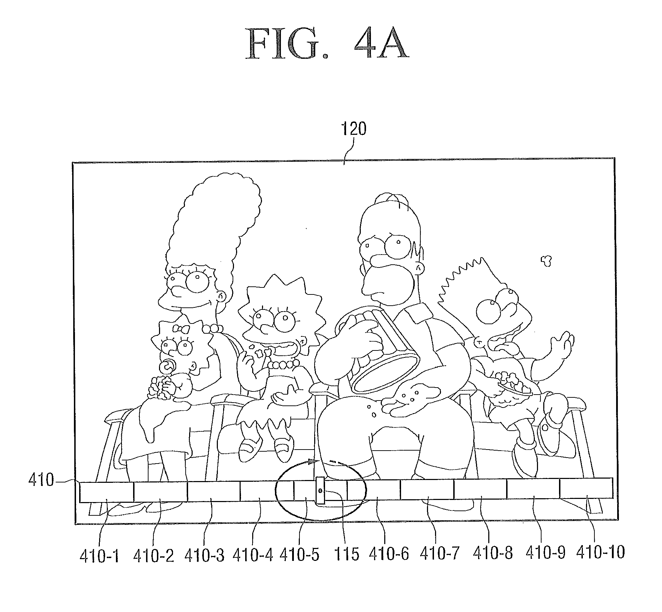

FIG. 4A illustrates a method for extending a plurality of sections 410-4, 410-5, and 410-6 on a progress bar 410 by drawing a circle passing through two sections 410-4 and 410-6.

Referring to FIG. 4A, if the user draws a circle passing through one section 410-4 and another section 410-6 on the progress bar 410, the two sections 410-4 and 410-6 and section 410-5 disposed therebetween are selected. In this case, the two sections 410-4 and 410-6 and section 410-5 disposed therebetween may be selected as long as the user touches the two sections 410-4 and 410-6 even if the user draws a circle.

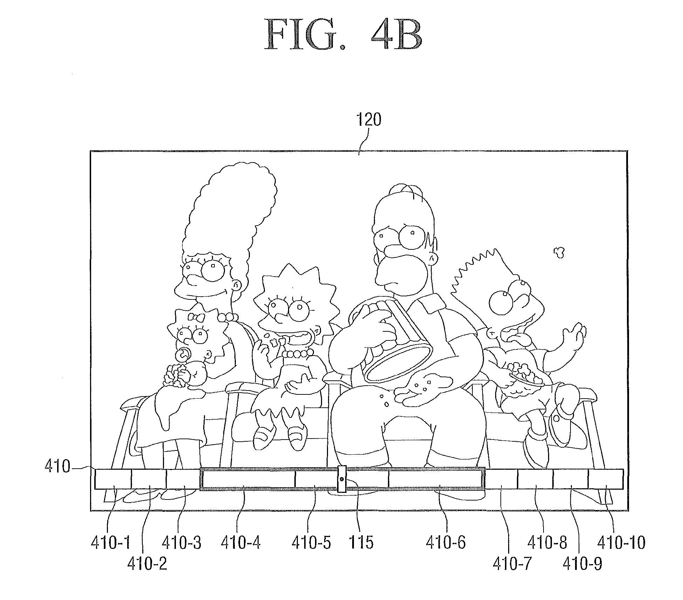

FIG. 4B illustrates the extended length of the selected sections 410-4, 410-5, and 410-6 and the reduced lengths of the non-selected sections 410-1, ..., 410-3, 410-7, ..., and 410-10 on the progress bar 410 when the user selects the three sections 410-4, 410-5, and 410-6 on the progress bar 410 by drawing a circle passing through two sections 410-4 and 410-6, as illustrated in FIG. 4A. In this case, the extended sections 410-4, 410-5, and 410-6 are highlighted to be distinct from the reduced sections 410-1, ..., 410-3, 410-7, ..., and 410-10, as illustrated in FIG. 4B.

That is, when the user draws a circle passing through two sections 410-4 and 410-6 on the progress bar 410, the same result occurs as when the user touches two sections 310-4 and 310-6 in the exemplary embodiment illustrated in FIGs. 3A and 3B.

In the present exemplary embodiment, three sections 410-4, 410-5, and 410-6 are selected to be extended. However, it is understood that another exemplary embodiment is not limited thereto, and any number of sections may be selected to be extended by touching two sections as described above.

There are various methods of selecting two sections other than the methods described with reference to FIGs. 3A to 4B. For example, the user may select two sections by touching one section first and then touching another section within a predetermined period of time (for example, one second). In addition, the user may select two sections by touching one section and another section at the same time.

A process of extending a reduced section on a progress bar 510 is described with reference to FIGs. 5A through 5C. FIG. 5A illustrates a method of selecting and extending section 510-5 on the progress bar 510.

As illustrated in FIG. 5A, on the touch screen 100 displaying the progress bar 510, if the user selects section 510-5 of the progress bar 510, the length of section 510-5 is extended on the touch screen 100. The lengths of the non-selected sections 510-1, ..., 510-4, 510-6, ..., and 510-10 are reduced. Section 510-5 may be selected in the same manner as described with reference to FIG. 1A or FIG. 2A.

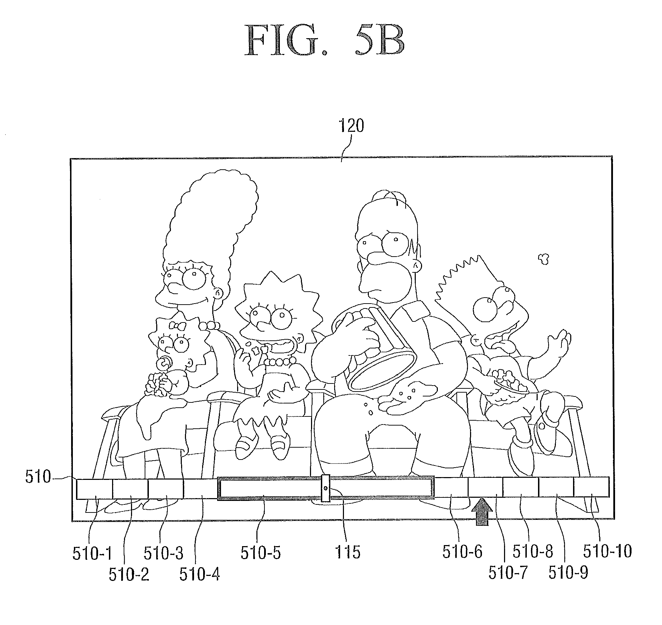

FIG. 5B illustrates the extended length of section 510-5 and the reduced lengths of the non-selected sections 510-1, ..., 510-4, 510-6, ..., and 510-10 on the progress bar 510 when the user selects section 510-5 on the progress bar 510 as illustrated in FIG. 5A. In this state, if a user command is input to select reduced section 510-7, the length of reduced section 510-7 is extended and the lengths of the remaining sections 510-1, ..., 510-6, 510-8, ..., and 510-10 are reduced.

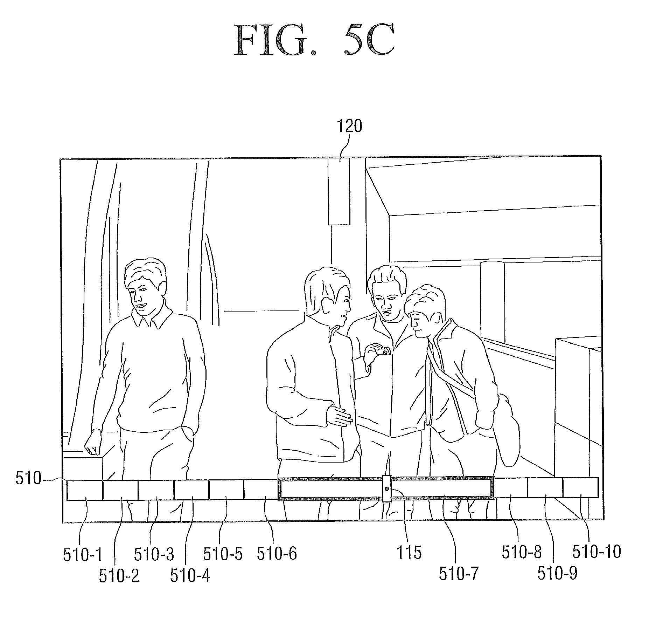

FIG. 5C illustrates the extended length of section 510-7 and the reduced lengths of the remaining sections 510-1, ..., 510-6, 510-8, ..., and 510-10 on the progress bar 510 when the user inputs a command to extend reduced section 510-7 on the progress bar 510 as illustrated in FIG. 5B. In this case, a position item 515 indicating a current playback position is also moved.

As described above, the selected section is extended and the remaining sections are reduced, so all the sections can be displayed. Accordingly, the user can easily and conveniently input a command to extend the reduced section without executing a new progress bar or menu.

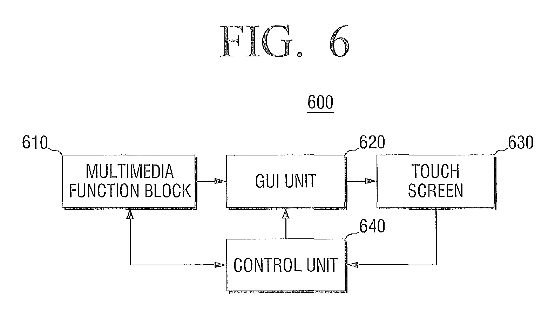

FIG. 6 is a block diagram of a multimedia device 600 which provides a graphical user interface (GUI) including a progress bar 110 having an extended section according to an exemplary embodiment. As illustrated in FIG. 6, the multimedia device 600 may include a multimedia function block 610, a GUI unit 620, a touch screen 630, and a control unit 640.

The multimedia function block 610 performs functions of the multimedia device 600. For example, if the multimedia device 600 is a mobile phone, the multimedia function block 610 can perform a phone function, a short message service (SMS) function, and a content storage/playback function. Similarly, if the multimedia device 600 is an electronic picture frame, the multimedia function block 610 can perform a content (in particular, image content) storage/playback function. In addition, the multimedia function block 610 can perform playback, skip, stop and movement of a playback position of multimedia content.

The GUI unit 620 adds a GUI to an image output from the multimedia function block 610.

The touch screen 630 receives a user's touch and drag inputs, and displays an image to which a GUI is added by the GUI unit 620.

The touch screen 630 receives a command to select one of a plurality of sections on the progress bar 110.

The control unit 640 controls the operation of the multimedia function block 610 according to a user command input through the touch screen 630 or another manipulation method or device (not shown). In addition, the control unit 640 controls the GUI unit 620 to display a GUI corresponding to the user's manipulation on the touch screen 630.

More specifically, if a user command to display the progress bar 110 of content being displayed is input through the touch screen 630, the control unit 640 controls the GUI unit 620 to display the progress bar along with the content. If a user command to play back, stop, or skip content is input through the touch screen 630, the control unit 640 plays back, stops, or skips the content according to the input user command. If the user moves the position of the position item 115 of the progress bar 110 on the touch screen 630, the control unit 640 controls the GUI unit 620 to move the position item 115 to the position touched by the user and controls the multimedia function block 610 to play back the content from the touched position.

In addition, as illustrated in FIGs. 1A through 5C, if a user command is input to extend a specific section of the progress bar 110 on the touch screen 630, the control unit 640 controls the GUI unit 620 to extend the selected section and reduce the non-selected sections. In this state, if the user selects a non-selected section, the control unit 640 controls the GUI unit 620 to extend the newly selected section and reduce the remaining sections.

Furthermore, if a user command is input to extend a specific section of the progress bar 110 on the touch screen 630, the control unit 640 controls the GUI unit 620 to highlight and extend the selected section.

The control unit 640 controls the multimedia device 600 to provide GUIs and functions as illustrated in FIGs. 1A through 5C.

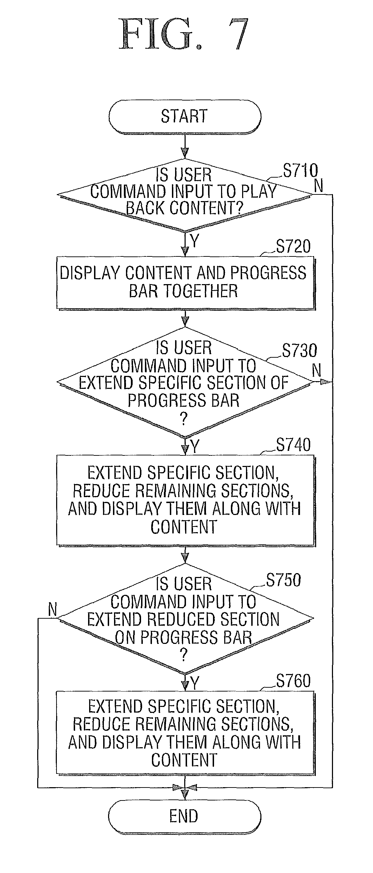

FIG. 7 is a flow chart illustrating a GUI providing method according to an exemplary embodiment. Referring to FIG. 7, the multimedia device determines if a user command is input to play back content (S710).

If the multimedia device determines that a user command is input to play back content (S710-Y), the multimedia device displays the content being played back and the progress bar 110 for the content (S720) on the touch screen 100. The progress bar 110 may be displayed by the user's manipulation.

Subsequently, the multimedia device determines if a user command is input to extend a specific section of the progress bar 110 (S730).

If the multimedia device determines that a user command is input to extend a specific section of the progress bar 110 (S730-Y), the multimedia device extends the specific section of the progress bar 110 and reduces the remaining sections (S740). The progress bar 110 is displayed along with the content. The multimedia device maintains a constant length of the progress bar 110 and displays all of the sections of the progress bar 110.

More specifically, if the entire length of the progress bar 110 is 20 cm, the lengths of the respective sections are 2 cm before a specific section is extended. However, if a user command is input to extend a specific section, the specific section is extended to 11 cm and the remaining sections are respectively reduced to 1 cm. That is, the entire length of the progress bar 110 is maintained and all the sections of the progress bar 110 are displayed, but the specific section is extended and the remaining sections are reduced. The lengths of the reduced sections are the same. In this case, the extended section is highlighted, though it is understood that another exemplary embodiment is not limited thereto.

The multimedia device determines if a user command is input to extend a reduced section (S750).

If the multimedia device determines that a user command is input to extend a reduced section (S750-Y), the multimedia device extends the reduced section selected by the user and reduces the non-selected sections. The progress bar 110 is displayed along with the content (S760). The multimedia device may highlight the extended section.

The multimedia device 600 can provide GUIs and functions as illustrated in FIGS. 1A through 5C. Following this process, the progress bar 110 having an extended section can be provided to the user. As a result, the user can manipulate a desired section of the progress bar 110 more precisely.

In the above exemplary embodiments, a specific section of the progress bar 110 is extended, but this is merely an example. That is, aspects of the exemplary embodiments can be applied even when one or more specific sections of other GUI items are extended. For example, aspects of the exemplary embodiments can be applied when a section of a state adjusting bar or a scroll bar for adjusting a volume or a channel is extended.

In the above exemplary embodiments, a manipulation unit to input a user command to extend a section of the progress bar 110 is implemented as the touch screen 100, but this is merely an example. That is, aspects of the exemplary embodiments can be applied to various manipulation units other than the touch screen 100. For example, the manipulation unit may be implemented as a mouse or a pointing device.

As can be appreciated from the above description, if a specific section of a GUI item is selected, the selected section is extended and the non-selected sections are reduced, so the user can search the selected section more precisely. Furthermore, the non-selected sections do not disappear and all the sections are displayed, so it is possible for the user to extend a reduced section without a separate window or a separate progress bar.

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the multimedia device 600 can include a processor or microprocessor executing a computer program stored in a computer-readable medium, such as a local storage.

The foregoing exemplary embodiments are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing a graphical user interface GUI comprising a GUI item comprising a plurality of sections (110-1, 110-2, ..., 110-10) each having a respective predetermined length, the method comprising:
determining if a user command is input to select a specific section (110-5) of the plurality of sections of the GUI item; and
extending the length of the selected section and reducing the lengths of non-selected sections with respect to the respective predetermined length if it is determined that the user command is input to select the specific section of the GUI item.

2. The method according to claim 1, wherein in the extending and reducing operation, the entire length of the GUI item is maintained and all the sections of the GUI item are displayed.

3. The method according to claim 1 or 2, wherein in the determining operation, it is determined if the user command is input through a touch screen (100).

4. The method according to claim 3, wherein in the determining operation, if the specific section (110-5) of the GUI item is touched for greater than a preset period of time, it is determined that the user command is input to select the specific section of the GUI item, and
in the extending and reducing operation, the length of the specific section which is touched for greater than the preset period of time is extended and the lengths of the remaining sections are reduced with respect to the respective predetermined length.

5. The method according to claim 3, wherein in the determining operation, if the specific section (110-5) of the GUI item is touched at least twice consecutively, it is determined that the user command is input to select the specific section of the GUI item, and
in the extending and reducing operation, the length of the specific section which is touched at least twice consecutively is extended and the lengths of the remaining sections are reduced with respect to the respective predetermined length.

6. The method according to claim 3, wherein in the determining operation, if a first section on the GUI item is touched and dragged to a second section on the GUI item, it is determined that the user command is input to select the first section to the second section on the GUI item, and
in the extending and reducing operation, the lengths of the first to second sections are extended and the lengths of the remaining sections are reduced with respect to the respective predetermined length.

7. The method according to claim 3, wherein in the determining operation, if the GUI item (410-5) is touched to pass through a first section (410-4) and a second section (410-6), it is determined that the user command is input to select the first section to the second section on the GUI item, and
in the extending and reducing operation, the lengths of the first to second sections are extended and the lengths of the remaining sections are reduced with respect to the respective predetermined length.

8. The method according to any one of claims 1 to 7, further comprising:
after the length of the selected section (110-5) is extended, determining if a user command is input to extend a reduced section; and
extending the length of the reduced section and reducing the remaining sections with respect to the respective predetermined length if it is determined that the user command is input to extend the reduced section.

9. The method according to any one of claims 1 to 8, wherein the GUI item comprises at least one of a progress bar (110), a scroll bar, and a state adjusting bar.

10. The method according to any one of claims 1 to 9, wherein the plurality of sections of the GUI item are divided in a time unit.

11. A multimedia device (600) for providing a graphical user interface GUI comprising a GUI item comprising a plurality of sections (110-1, 110-2, ..., 110-10) each having a respective predetermined length, the multimedia device comprising:
an input unit to input a user command to select a specific section (110-5) of the plurality of sections of the GUI item; and
a control unit (640) to extend the length of the selected section and reduce the lengths of non-selected sections with respect to the respective predetermined length if it is determined that the user command is input to select the specific section of the GUI item.

12. The multimedia device according to claim 11, wherein the control unit (640) is arranged to control the multimedia device so that the entire length of the GUI item is maintained and all the sections of the GUI item are displayed.

13. The multimedia device according to claim 11 or 12, wherein the input unit is a touch screen (100).

14. The multimedia device according to claim 13, wherein if the specific section (110-5) of the GUI item is touched for greater than a preset period of time, the control unit (640) determines that the user command is input to select the specific section of the GUI item so that the length of the specific section which is touched for greater than the preset period of time is extended and the lengths of the remaining sections are reduced with respect to the respective predetermined length.

15. The multimedia device according to any one of claims 11 to 14, wherein after the length of the selected section (110-5) is extended, if a user command is input to extend a reduced section, the control unit (640) extends the length of the reduced section and reduces the remaining sections.

## Patentansprüche

1. Verfahren zum Bereitstellen einer grafischen Benutzeroberfläche GUI, die ein GUI-Element aufweist, das mehrere Abschnitte (110-1, 110-2, ..., 110-10) aufweist, die jeweils eine jeweilige vorbestimmte Länge haben, wobei das Verfahren umfasst:
Ermitteln, ob ein Benutzerbefehl eingegeben wird, um einen spezifischen Abschnitt (110-5) der mehreren Abschnitte des GUI-Elements auszuwählen, und
Erweitern der Länge des ausgewählten Abschnitts und Verringern der Längen der nichtausgewählten Abschnitte in Bezug auf die jeweilige vorbestimmte Länge, wenn ermittelt wird, dass der Benutzerbefehl zum Auswählen des spezifischen Abschnitts des GUI-Elements eingegeben wird.

2. Verfahren nach Anspruch 1, wobei im Erweiterungs- und Verringerungsvorgang die Gesamtlänge des GUI-Elements aufrecht erhalten wird und alle Abschnitte des GUI-Elements angezeigt werden.

3. Verfahren nach Anspruch 1 oder 2, wobei im Ermittlungsvorgang ermittelt wird, ob der Benutzerbefehl über einen Touchscreen (100) eingegeben wird.

4. Verfahren nach Anspruch 3, wobei im Ermittlungsvorgang, wenn der spezifische Abschnitt (110-5) des GUI-Elements länger als eine voreingestellte Zeitspanne berührt wird, ermittelt wird, dass der Benutzerbefehl zum Auswählen des spezifischen Abschnitts des GUI-Elements eingegeben wird, und
im Erweiterungs- und Verringerungsvorgang die Länge des spezifischen Abschnitts, der länger als die voreingestellte Zeitspanne berührt wird, erweitert wird und die Längen der übrigen Abschnitte in Bezug auf die jeweilige vorbestimmte Länge verringert werden.

5. Verfahren nach Anspruch 3, wobei im Ermittlungsvorgang, wenn der spezifische Abschnitt (110-5) des GUI-Elements wenigstens zweimal nacheinander berührt wird, ermittelt wird, dass der Benutzerbefehl zum Auswählen des spezifischen Abschnitts des GUI-Elements eingegeben wird, und
im Erweiterungs- und Verringerungsvorgang die Länge des spezifischen Abschnitts, der wenigstens zweimal nacheinander berührt wird, erweitert wird und die Längen der übrigen Abschnitte in Bezug auf die jeweilige vorbestimmte Länge verringert werden.

6. Verfahren nach Anspruch 3, wobei im Ermittlungsvorgang, wenn ein erster Abschnitt auf dem GUI-Elements berührt und zu einem zweiten Abschnitt auf dem GUI-Element gezogen wird, ermittelt wird, dass der Benutzerbefehl zum Auswählen des ersten Abschnitts bis zum zweiten Abschnitt auf dem GUI-Element eingegeben wird, und
im Erweiterungs- und Verringerungsvorgang die Längen der Abschnitte vom ersten bis zweiten erweitert werden und die Längen der übrigen Abschnitte in Bezug auf die jeweilige vorbestimmte Länge verringert werden.

7. Verfahren nach Anspruch 3, wobei im Ermittlungsvorgang, wenn das GUI-Element (410-5) berührt wird, um durch einen ersten Abschnitt (410-4) und einen zweiten Abschnitt (410-6) zu gehen, ermittelt wird, dass der Benutzerbefehl zum Auswählen des ersten Abschnitts bis zum zweiten Abschnitt auf dem GUI-Element eingegeben wird, und
im Erweiterungs- und Verringerungsvorgang die Längen der Abschnitte vom ersten bis zweiten erweitert werden und die Längen der übrigen Abschnitte in Bezug auf die jeweilige vorbestimmte Länge verringert werden.

8. Verfahren nach einem der Ansprüche 1 bis 7, das ferner umfasst:
nach dem Erweitern der Länge des ausgewählten Abschnitts (110-5) Ermitteln, ob ein Benutzerbefehl zum Erweitern eines veringerten Abschnitts eingegeben wird, und
Erweitern der Länge des verringerten Abschnitts und Verringern der übrigen Abschnitte in Bezug auf die jeweilige vorbestimmte Länge, wenn ermittelt wird, dass der Benutzerbefehl zum Erweitern des verringerten Abschnitts eingegeben wird.

9. Verfahren nach einem der Ansprüche 1 bis 8, wobei das GUI-Element wenigstens eines von einem Fortschrittsbalken (10), einer Bildlaufleiste und einer Zustandseinstellleiste umfasst.

10. Verfahren nach einem der Ansprüche 1 bis 9, wobei die mehreren Abschnitte des GUI-Elements in eine Zeiteinheit eingeteilt sind.

11. Multimediavorrichtung (600) zum Bereitstellen einer grafischen Benutzeroberfläche GUI, die ein GUI-Element aufweist, das mehrere Abschnitte (110-1, 110-2, ..., 110-10) aufweist, die jeweils eine jeweilige vorbestimmte Länge haben, wobei die Multimediavorrichtung umfasst:
eine Eingabeeinheit zum Eingeben eines Benutzerbefehls zum Auswählen eines spezifischen Abschnitts (110-5) der mehreren Abschnitte des GUI-Elements, und
eine Steuereinheit (640) zum Erweitern der Länge des ausgewählten Abschnitts und Verringern der Längen der nichtausgewählten Abschnitte in Bezug auf die jeweilige vorbestimmte Länge, wenn ermittelt wird, dass der Benutzerbefehl zum Auswählen des spezifischen Abschnitts des GUI-Elements eingegeben wird.

12. Multimediavorrichtung nach Anspruch 11, wobei die Steuereinheit (640) zum Ansteuern der Multimediavorrichtung angeordnet ist, so dass die Gesamtlänge des GUI-Elements aufrecht erhalten wird und alle Abschnitte des GUI-Elements angezeigt werden.

13. Multimediavorrichtung nach Anspruch 11 oder 12, wobei die Eingabeeinheit ein Touchscreen (100) ist.

14. Multimediavorrichtung nach Anspruch 13, wobei, wenn der spezifische Abschnitt (110-5) des GUI-Elements länger als eine voreingestellte Zeitspanne berührt wird, die Steuereinheit (640) ermittelt, dass der Benutzerbefehl zum Auswählen des spezifischen Abschnitts des GUI-Elements eingegeben wird, so dass die Länge des spezifischen Abschnitts, der länger als die voreingestellte Zeitspanne berührt wird, erweitert wird und die Längen der übrigen Abschnitte in Bezug auf die jeweilige vorbestimmte Länge verringert werden.

15. Multimediavorrichtung nach einem der Ansprüche 11 bis 14, wobei nach dem Erweitern der Länge des ausgewählten Abschnitts (110-5), wenn ein Benutzerbefehl zum Erweitern eines verringerten Abschnitts eingegeben wird, die Steuereinheit (640) die Länge des verringerten Abschnitts erweitert und die übrigen Abschnitte verringert.

## Revendications

1. Procédé pour la fourniture d'une interface utilisateur graphique IUG comportant un élément d'IUG comportant une pluralité de sections (110-1, 110-2, ..., 110-10) ayant chacune une longueur prédéterminée respective, le procédé comportant :
l'étape consistant à déterminer si une commande d'utilisateur est entrée pour sélectionner une section spécifique (110-5) de la pluralité de sections de l'élément d'IUG ; et
l'étape consistant à augmenter la longueur de la section sélectionnée et à réduire les longueurs des sections non sélectionnées par rapport à la longueur prédéterminée respective s'il est déterminé que la commande d'utilisateur est entrée pour sélectionner la section spécifique de l'élément d'IUG.

2. Procédé selon la revendication 1, dans lequel, au cours de l'opération d'augmentation et de réduction, la longueur totale de l'élément d'IUG est maintenue et toutes les sections de l'élément d'IUG sont affichées.

3. Procédé selon la revendication 1 ou la revendication 2, dans lequel, au cours de l'opération de détermination, il est déterminé si la commande d'utilisateur est entrée par le biais d'un écran tactile (100).

4. Procédé selon la revendication 3, dans lequel, au cours de l'opération de détermination, si la section spécifique (110-5) de l'élément d'IUG est touchée pendant une durée supérieure à une période préréglée, il est déterminé que la commande d'utilisateur est entrée pour sélectionner la section spécifique de l'élément d'IUG, et
au cours de l'opération d'augmentation et de réduction, la longueur de la section spécifique qui est touchée pendant une durée supérieure à la période préréglée est augmentée et les longueurs des autres sections sont réduites par rapport à la longueur prédéterminée respective.

5. Procédé selon la revendication 3, dans lequel, au cours de l'opération de détermination, si la section spécifique (110-5) de l'élément d'IUG est touchée au moins deux fois de manière consécutive, il est déterminé que la commande d'utilisateur est entrée pour sélectionner la section spécifique de l'élément d'IUG, et
au cours de l'opération d'augmentation et de réduction, la longueur de la section spécifique qui est touchée au moins deux fois de manière consécutive est augmentée et les longueurs des autres sections sont réduites par rapport à la longueur prédéterminée respective.

6. Procédé selon la revendication 3, dans lequel, au cours de l'opération de détermination, si une première section de l'élément d'IUG est touchée et glissée jusque sur une deuxième section sur l'élément d'IUG, il est déterminé que la commande d'utilisateur est entrée pour sélectionner la première section jusque sur la deuxième section sur l'élément d'IUG, et
au cours de l'opération d'augmentation et de réduction, les longueurs de la première section jusque sur la deuxième section sont augmentées et les longueurs des autres sections sont réduites par rapport à la longueur prédéterminée respective.

7. Procédé selon la revendication 3, dans lequel, au cours de l'opération de détermination, si l'élément d'IUG (410-5) est touché pour passer au travers d'une première section (410-4) et d'une deuxième section (410-6), il est déterminé que la commande d'utilisateur est entrée pour sélectionner la première section jusque sur la deuxième section de l'élément d'IUG, et
au cours de l'opération d'augmentation et de réduction, les longueurs de la première section jusque sur la deuxième section sont augmentées et les longueurs des autres sections sont réduites par rapport à la longueur prédéterminée respective.

8. Procédé selon l'une quelconque des revendications 1 à 7, comportant par ailleurs :
après l'augmentation de la longueur de la section sélectionnée (110-5), l'étape consistant à déterminer si une commande d'utilisateur est entrée pour augmenter une section réduite ; et
l'étape consistant à augmenter la longueur de la section réduite et à réduire les autres sections par rapport à la longueur prédéterminée respective s'il est déterminé que la commande d'utilisateur est entrée pour augmenter la section réduite.

9. Procédé selon l'une quelconque des revendications 1 à 8, dans lequel l'élément d'IUG comporte au moins l'une parmi une barre de progression (110), une barre de défilement, et une barre de réglage d'état.

10. Procédé selon l'une quelconque des revendications 1 à 9, dans lequel les sections de la pluralité de sections de l'élément d'IUG sont divisées en une unité de temps.

11. Dispositif multimédia (600) pour la fourniture d'une interface utilisateur graphique IUG comportant un élément d'IUG comportant une pluralité de sections (110-1, 110-2, ..., 110-10) ayant chacune une longueur prédéterminée respective, le dispositif multimédia comportant :
une unité d'entrée servant à entrer une commande d'utilisateur pour sélectionner une section spécifique (110-5) de la pluralité de sections de l'élément d'IUG ; et
une unité de commande (640) servant à augmenter la longueur de la section sélectionnée et à réduire les longueurs des sections non sélectionnées par rapport à la longueur prédéterminée respective s'il est déterminé que la commande d'utilisateur est entrée pour sélectionner la section spécifique de l'élément d'IUG.

12. Dispositif multimédia selon la revendication 11, dans lequel l'unité de commande (640) est agencée pour commander le dispositif multimédia de telle sorte que la longueur totale de l'élément d'IUG est maintenue et toutes les sections de l'élément d'IUG sont affichées.

13. Dispositif multimédia selon la revendication 11 ou la revendication 12, dans lequel l'unité d'entrée est un écran tactile (100).

14. Dispositif multimédia selon la revendication 13, dans lequel, si la section spécifique (110-5) de l'élément d'IUG est touchée pendant une durée supérieure à une période préréglée, l'unité de commande (640) détermine que la commande d'utilisateur est entrée pour sélectionner la section spécifique de l'élément d'IUG de telle sorte que la longueur de la section spécifique qui est touchée pendant une durée supérieure à la période préréglée est augmentée et les longueurs des autres sections sont réduites par rapport à la longueur prédéterminée respective.

15. Dispositif multimédia selon l'une quelconque des revendications 11 à 14, dans lequel après l'augmentation de la longueur de la section sélectionnée (110-5), si une commande d'utilisateur est entrée pour augmenter une section réduite, l'unité de commande (640) augmente la longueur de la section réduite et réduit les autres sections.
